(19) Europäisches Patentamt
European Patent Office
Office européen des brevets

(11) Publication number: 0 454 780 B1

(12) EUROPEAN PATENT SPECIFICATION

(45) Date of publication of patent specification: 13.04.94
(51) Int. Cl.5: C04B 35/58
(21) Application number: 90902875.5
(22) Date of filing: 03.01.90
(86) International application number: PCT/US90/00058
(87) International publication number: WO 90/08113 (26.07.90 90/17)

(54) SUPER TOUGH MONOLITHIC SILICON NITRIDE.

(30) Priority: 17.01.89 US 297530
14.12.89 US 450899
(43) Date of publication of application: 06.11.91 Bulletin 91/45
(45) Publication of the grant of the patent: 13.04.94 Bulletin 94/15
(84) Designated Contracting States: DE FR GB IT SE
(56) References cited:
EP-A- 0 123 292
EP-A- 0 247 528
US-A- 4 499 192

(73) Proprietor: AlliedSignal Inc.
Columbia Road and Park Avenue
P. O. Box 2245R
Morristown New Jersey 07960(US)

(72) Inventor: LI, Chien-Wei
11 Crescent Road
Livingston, NJ 07039(US)
Inventor: YAMANIS, Jean
38 Fairmount Avenue
Morristown, NJ 07962(US)
Inventor: CARRASOUILLO, Gilbert
190 Grandview Avenue
Piscataway, New Jersey 08854(US)

(74) Representative: Brock, Peter William et al
UROUHART-DYKES & LORD
91 Wimpole Street
London W1M 8AH (GB)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



Rank Xerox (UK) Business Services
(3.10/3.09/3.3.3)

## Description

### CROSS REFERENCE TO RELATED APPLICATIONS

This is a continuation-in-part of copending application Serial No. 297,530, filed January 17, 1989.

### Description of the Invention

#### 1. Field of the Invention

The present invention relates to the field of silicon nitride ceramics and more particularly to a monolithic silicon nitride ceramic having high fracture toughness and R-curve behavior.

#### 2. Description of the Prior Art

The fracture toughness of commercially available silicon nitride materials today is in the range of 4 to 7 MPa $m^{0.5}$. Fracture toughness depends, to a certain degree, on the composition and volume fraction of the grain boundary phase and, to a greater degree, on the grain size, grain size distribution, and aspect ratio of the $Si_3N_4$ grains.

Prior publications [J.A. Salem and J.L. Shannon Jr. J. Mater. Science, Vol. 22, 321-324, (1987). M.G. Jenkins, et al., Int. J. Fracture, Vol. 34, 281-295 (1987)], report that monolithic silicon nitride ceramics with fracture toughness of 4.7 MPa.$m^{0.5}$ and 7 MPa.$m^{0.5}$ have flat crack growth resistance. In other words, these monolithic silicon nitrides do not exhibit R-curve behavior, where R-curve behavior is defined as increasing resistance to crack growth with increasing crack length".

Silicon nitride ceramics are conventionally densified under pressureless or pressure-assisted (i.e. hot-pressed or hot isostatically-pressed) conditions. Silicon nitride, a covalently bonded material is typically densified via liquid phase processes using a quantity of sintering aids. Liquid-phase sintered silicon nitride develops acicular, needle-like, grains via a reconstructive process. Alpha-$Si_3N_4$ particles in the raw material powder dissolve in the oxynitride liquid that forms at or below the densification temperature, silicon and nitrogen ions are transported through this liquid, and beta-$Si_3N_4$ precipitates out in the form of hexagonal prisms, i.e., acicular grains.

J.L. Iskoe and F.F. Lange in Ceramic Microstructures '76 (edited by R.M. Fulrath and J.A. Pask, Westview Press, Boulder, Co.), 669-678 (1977) disclose that the aspect ratio of $Si_3N_4$ grains is uniquely determined by the fractions of alpha-and beta-$Si_3N_4$ phases in the starting powder, the aspect ratio increasing with increasing alpha-phase content. Later F.F. Lange in J. Am. Ceram. Soc., vol. 62, 428-430 (1979) and in Am. Ceram. Soc. Bull., vol. 62, 1369-1374 (1983) disclosed that the fracture toughness of silicon nitride, hot-pressed with 5% MgO at 1750 °C for 2 hours, increases with the alpha-phase content in the starting powder and, therefore, with aspect ratio. However, the toughness reaches a maximum of about 6 MPa $m^{0.5}$ at a starting alpha-phase content of about 70%, with higher alpha-$Si_3N_4$ fractions having no further effect.

Tani et al. disclose in Am. Ceram. Soc. Bull., vol. 65, 1311-1315 (1986) experimental samples of silicon nitride with fracture toughness in the range of 6.7 to 9.0 MPa $m^{0.5}$ as measured by the Chevron Notch method. In the preparation of these samples, Tani et al. used silicon nitride powder which contained 83% alpha-$Si_3N_4$. For those ceramics, Tani et al. disclose the use of (1) sintering aids composed of 0-5 w% $Al_2O_3$ with 5 w% of yttria ($Y_2O_3$), lanthana ($La_2O_3$), or ceria ($CeO_2$), (2) sintering temperature from 1700 to 2000 °C, (3) a variety of thermal ramping and hold schedules, and (4) elevated nitrogen pressure. No damage tolerance, R-curve behavior or Weibull modulus are disclosed by Tani et al. for the ceramics they report.

In view of the apparent limitations to the fabrication of monolithic silicon nitride with high fracture toughness, attempts have been made to reinforce monolithic silicon nitride with SiC whiskers. Most reports of silicon nitride reinforced with SiC whiskers claim fracture toughness in the 7 to 9 MPa $m^{0.5}$ range. The best that has been achieved by SiC whisker reinforcement is represented by the data of Shalek et al. in Am. Ceram. Soc. Bull.,vol. 65, 351-356 (1986). Shalek et al. used SiC whiskers fabricated by a vapor-liquid-solid (VLS) process and densified the SiC-$Si_3N_4$ composite using uniaxial hot pressing. The average fracture toughness of the composite was about 10 MPa $m^{0.5}$, as measured by the Chevron Notch method, for whisker volume fractions of 10-30%. No damage tolerance, R-curve behavior or Weibull modulus are disclosed for the composites.

Significant problems are presented in manufacture of whisker reinforced composites into useful ceramic components. These problems are encountered in batch formulation, where whiskers must be uniformly mixed throughout the matrix while maintaining size and shape; in green forming, where whisker orientation and de-mixing can occur; and in composite densification, where pressure assisted processes, such as uniaxial hot pressing and hot isostatic pressing, are required. Furthermore, such pressure assisted processes place severe restrictions on component size and shape, and on component cost. Such problems are avoided in fabrication of monolithic $Si_3N_4$ ceramics using gas pressure sintering. However, up until the present time, the fracture toughness obtained for monolithic $Si_3N_4$ ceramics has been relative low.

In addition to the properties of monolithic silicon nitrides which has been discussed up to now, the thermal conductivity of these ceramics has ranged from about 25 to about 40 $W.m^{-1}.K^{-1}$ [see for example, "Engineering Property Data on Selected Ceramics, Vol. 1, Nitrides", Battelle Columbus Laboratories, Columbus, Ohio, p. 5.3.3-3 (1976) and G. Ziegler and D.P.H. Hasselman, J. Mater. Sci., Vol. 16, 495-503 (1981)].

Thus, up until the present time, monolithic silicon nitride ceramics have had relatively low fracture toughness, low Weibull modulus and low thermal condutivity; and none of these monolithic $Si_3N_4$ ceramics has ever been shown to have R-curve behavior or damage tolerance.

## Summary of the Invention

The present invention provides a silicon nitride based ceramic which is economical to manufacture and has high fracture toughness. The Chevron Notch fracture thoughness of the ceramic is greater than 9 MPa $m^{0.5}$, preferably at least about 9.5 MPa $m^{0.5}$, and more preferable ranges from about 10 to 18 MPa $m^{0.5}$. In addition, the ceramic exhibits R-curve behavior making it more tolerant to flaws induced during manufacture or service. Ceramics provided by this invention have a 4-point bend strength Weibull modulus of at least 15 and a damage tolerance characterized by the equation $B = (d \text{ Log } s)/d (\text{Log } P)$, where s is the 4-point bend strength measured after indentation, P is the Vickers indentation load and B is greater than -0.3. Furthermore, the thermal conductivity of the monolithic silicon nitride ceramics of the present invention is higher than 40 $W.m^{-1}.K^{-1}$ and oftentimes as high as 80 $W.m^{-1}.K^{-1}$.

The invention further provides a process for making a monolithic, silicon nitride based ceramic wherein the ceramic is densified and heat treated in the presence of a sintering aid that has a solidus temperature less than the densification temperature and remains stable throughout the heat treatment. It has been found that by carrying out the densification and heat treatment step at a temperature of at least about 1850 °C, and preferably about 1900 °C to 2100 °C, for a time period of at least 30 minutes, there is promoted within the ceramic the growth of needle-like $Si_3N_4$ grains of such size and distribution that the ceramic exhibits, in combination, R-curve behavior and high fracture toughness.

In this manner there is provided monolithic silicon nitride ceramics which have a highly acicular microstructure and a high density of large grains, and which further exhibit high fracture toughness (eg. Chevron Notch fracture toughness ranging from 9 to 18 MPa $m^{0.5}$), R-Curve behavior (eg. B constant greater than -0.3, as discussed hereinafter in greater detail), high tolerance to damage (eg. samples with defects remain strong and often retain as much as 60% of strength after 196 newtons (N) Vickers indentation on the tensile surface of a sample under bending stress), high Weibull modulus (eg. greater than 12 and often as high as 20 or more), and superior thermal conductivity (eg. greater than 45 $W \cdot m^{-1} \cdot K^{-1}$ and often as high as 80 $W \cdot m^{-1} \cdot K^{-1}$.

Advantageously, problems associated with forming and densification of whisker reinforced composites are substantially eliminated. The monolithic silicon nitride based ceramic is readily manufactured in diverse sizes and shapes which are tough, durable, and reliable in operation. As a result, the ceramics of the present invention are especially suited for use in load bearing applications such as static or moving turbomachinery components having a broad operating temperature range, pump and valve components, internal combustion engine parts, cutting tools, and the like. Further, the ceramics of the invention are suitable for use as matrices for ceramic composite materials.

## Brief Description of the Drawings

The invention will be more fully understood and further advantages will become apparent when reference is made to the following detailed description and the accompanying drawings, in which

FIG. 1(a) is a scanning electron micrograph of a fracture surface of a silicon nitride based ceramic densified at a temperature of 1765 °C for 2 hours;

FIG. 1(b) is a scanning electron micrograph of a fracture surface of a silicon nitride based ceramic densified at a temperature of 1900°C for 2 hours and heat treated at a temperature of 2050°C for 2 hours;

FIG. 2 is a scanning electron micrograph of a fracture surface of a silicon nitride based ceramic densified at a temperature of 1900°C for 90 minutes and heat treated at a temperature of 2000°C for 2 hrs;

FIG. 3(a) is a scanning electron micrograph of a polished surface of a silicon nitride based ceramic densified at a temperature of 1900°C for 2 hours and heat treated at a temperature of 2050°C for 3 hours;

FIG. 3(b) is a scanning electron micrograph of a fracture surface of the silicon nitride based ceramic of FIG. 3(a);

FIG. 4 is a graph in which toughness is measured as a function of crack length, the graph showing R-curve behavior for a different silicon nitride billet, the billet having been densified and heat treated under the condition for the ceramics of FIGS. 3(a) and 3(b);

FIG. 5(a) and 5(b) are scanning electron micrographs of the billet of FIG. 4 showing a tortuous crack path;

FIG. 6 is a plot of indentation bend strength measured as a function of indentation load for the ceramic of FIG. 1(a);

FIG. 7 is a graph depicting indentation bend strength as a function of indentation load for a commercial silicon nitride based ceramic and the ceramic of FIG. 3(a);

FIG. 8 is a graph depicting on linear scale the data presented in FIG. 7;

FIG. 9 is a plot of cummulative probability of failure measured as function of 4-point bend strength for the ceramic of FIG. 3(a); and

FIG. 10 is a schematic of the double cantilever beam specimen used in measuring R-curve behavior.

## Detailed Description of the Invention

In the manufacture of silicon nitride ceramics, a silicon nitride powder typically having an average particle size less than 2 micrometers and alpha silicon nitride content of about 90 weight percent is mixed with sintering aid.

The sintering aid may be a single oxide, nitride or other compound from the following: Group IIIB metals Sc, Y, and La; the rare earths Ce, Pr, Nd, Pm, Sm, Eu, Gd, Tb, Dy, Ho, Er, Tm, Yb, and Lu; Group IIA metals Be, Mg, Ca, Sr, and Ba; Group IIIA metals Al and Ti; and silica or suitable combinations of the above compounds. The specific composition of the sintering aid is chosen so as:

(a) to permit densification of the silicon nitride powder to a useful ceramic at the desired densification temperature;

(b) to lead to a strong and tough ceramic over a broad temperature range, and;

(c) to yield a ceramic with adequate oxidation and thermal shock resistance.

The sintering aid should be used in sufficient quantity to allow densification to proceed and development of the desirable microstructure to take place. Preferably the sintering aid should be present in an amount greater than 6 wt%, more preferably greater than 7 wt%, and most preferably greater than 8 wt%, the balance being silicon nitride.

The mixture of silicon nitride and sintering aid is formed into the desired shape by slip casting, cold isostatic pressing, die forming, or other conventional ceramic manufacturing techniques. The green ceramic part thus formed is then densified, typically by firing in an electrically heated furnace in a nitrogen containing atmosphere.

An important feature of the present invention is that low cost conventional ceramic processing techniques can be used to form high toughness ceramics. The densification process may be a single or multi-step one. It may have one or many temperature ramping stages, the rates of which allow satisfactory heat transfer to occur. The densification process may also have one or many temperature hold stages. The process must, however, bring the ceramic to sufficiently high temperature, and maintain this thermal environment for a sufficient time period for densification to occur and for the desired microstructure to develop. The densification and heat treatment process should heat and maintain the ceramic at, at least 1850°C for at least 30 min. Preferably, the ceramic should be maintained at a temperature of at least 1900°C for at least 90 min and most preferably at a temperature of at least 1950°C for at least 150 min.

Processing of the ceramic for the particular temperature and time set forth above is required for the development of the desirable microstructure, which yields high fracture toughness, R-curve behavior, high Weibull modulus and damage tolerance, including impact resistance, thermal shock resistance, creep resistance and long stress rupture life.

The following examples are presented to provide a more complete understanding of the invention. The specific technique, conditions, materials, proportions and reported data are set forth to illustrate the principles and practice of the invention. Examples 1, 2-5, and 7-19, specify how to formulate the powder mixture of silicon nitride and sintering aids; how to form this powder mixture into compacts for subsequent densification; and how to set the temperature, time and nitrogen pressure during densification in order to obtain unique silicon nitride ceramics. These ceramics have novel microstructures with a high density of large grains and are characterized by the unusually high fracture toughness (as measured by chevron notch techniques) of 9.25 to 11.0 $MPa.m^{0.5}$. In addition to high fracture toughness these monolithic silicon nitride ceramics have a rising crack growth resistance with increasing crack length, i.e. R-curve behavior, high tolerance to damage, high Weibull modulus, and thermal conductivity. "Test 1. R-Curve Behavior", "Test 2. Indentation/Strength Behavior", and "Test 3. Weibull Modulus" set forth the methods to be used to test ceramics for the properties of R-curve behavior, damage tolerance, and Weibull modulus, respectively. These methods can be readily used to characterize the properties of ceramics.

## COMPARATIVE EXAMPLE 1

1. Preparation of Samples

$Si_3N_4$ powder with alpha $Si_3N_4$ content greater than 85% and having a BET surface area of 12 $m^2/g$, a metallic or cationic impurity level of less than 0.1 % by weight of C, Cl, Fe, Al, Ca, or K, an oxygen content of 1.7-1.9% by weight and having average grain size of 0.6 micrometer was used. The nitride powder was mixed with 4% wt yttria ($Y_20_3$) and 4 wt% $MgAl_2O_4$ sintering aid powders. Both sintering aid powders had a purity of 99.9% by weight and an average grain size less than 10 micrometer. The formulated mixture weighing 350g, was wet-milled for at least 2.5 hours in a one liter polyethylene vessel using zirconia grinding media and 500 cc of isopropyl alcohol. The mixture was vacuum dried, dry milled for 2 hours in a polyethylene vessel using zirconia grinding media , and the resulting powder sieved through a 60 mesh nylon screen. This milled powder was then isostatically pressed at 30,000 psi into a 2 cm x 2 cm x 6 cm bar, which was subsequently fired at 1765 °C under one atmosphere of nitrogen gas for 2 hrs.

2. Characterization of the Sintered Billet

The density of the sintered body was measured by water immersion or geometrical methods and found to be in the range of 3.17-3.23 gcc (greater than 97% TD). The fracture toughness value was measured using a Chevron-Notched sample geometry and found to be 6.0 (± 0.25) MPa $m^{0.5}$.

FIG. 1(a) is a scanning electron microscopy photograph of a fracture surface of a ceramic prepared in this example. This photomicrograph shows that the microstructure of this material is comprised of very fine grains.

## EXAMPLE 1

1. Preparation of Samples

Cold isopressed bars of the same composition as that described in Comparative Example 1 were prepared by a similar procedure. These billets were fired at 1900 °C for 2 hours under 130 psi of $N_2$ and at 2050 °C for 3 hours and under 1200 psi of $N_2$.

2. Characterization of the Sintered Billet

The density of the sintered body was measured by water immersion or geometrical methods and found to be 3.23 gcc. The fracture toughness value was measured using a Chevron-Notched sample geometry and found to be 10.3 MPa $m^{0.5}$.

The microstructure of the sintered sample was examined by scanning electron microscopy.

FIG. 1(b) shows a fracture surface of this material. The microstructure is comprised of a wide distribution of small and large acicular grains which bring about the material's high toughness.

**EXAMPLES 2-19**

1. Preparation of green samples.

A raw material powder of $Si_3N_4$ with alpha $Si_3N_4$ content greater than 85% and containing less than 100 PPM of metallic impurities such as Fe, Al, Ca, Na, or K and 1.7% to 1.9% by weight of oxygen and having an average grain size of 0.6 micrometer and a specific surface area of 12.2 $m^2/g$ was mixed with an additive as shown in Table 1. The additive had a purity of more than 99% by weight and an average grain size less than 10 micrometers. Mixing was carried out in accordance with the conditions specified in Table 1. Thereafter, 200 to 300 g of the raw material thus formulated were wet milled in a 1.2 liter plastic bottle using zirconia grinding media and isopropanol (500 ml) for at least 6 hours. The slurry was vacuum dried overnight and the milled powder was sieved through a 30-mesh sieve. The sieved powder was isostatically pressed at a pressure of 206 MPa to obtain billets of approximate dimension 2 cm by 2 cm by 6 cm.

2. Firing process.

Billets prepared as specified above were placed in a graphite crucible. The crucible was loaded into a two-zone carbon furnace having a hot zone 15 mm in diameter by 22 mm in height. The furnace was then evacuated and pressurized to 50 PSi with pure nitrogen gas. After three gas release-pressurize cycles, the furnace was operated at the heating schedules shown in Table 1.

3. Characterization of Sintered Billets

The densities of the sintered bodies were measured by water immersion or geometrical methods. The fracture toughness values were measured using either short bar Chevron-Notched or 3-pt bend Chevron-Notched sample geometry. The results are shown in Table 2. The microstructure of the sintered sample was examined by SEM. Figure 2(a) shows the fracture surface of a sample prepared in accordance with Example 2.

The microstructure of the silicon nitride ceramic prepared in Example 2 is shown in FIG. 2, which is a photomicrograph obtained by scanning electron microscopy.

The microstructure of the silicon nitride prepared according to Example 3 is shown in FIG. 3(a) and FIG. 3(b). FIG 3(a) is a photomicrograph of a polished cross section of the ceramic. FIG. 3(b) is a photomicrograph of a fracture surface of the ceramic of Example 3. Both polished and fracture surface pictures indicate that this ceramic has a high density of large silicon nitride grains.

TABLE 1

| Example | Powder | Composition of Sintering Additive (wt %) | Temp. (°C) | Time (h) | $N_2$ (MPa) | PLUS | Temp. (°C) | Time (h) | $N_2$ (MPa) |
|---|---|---|---|---|---|---|---|---|---|
| 2 | $Si_3N_4$ | 6.75 $La_2O_3$-2.25 $Y_2O_3$-1 $SiO_2$ | 1900 | 1.5 | 1.03 | + | 2000 | 2 | 7.24 |
| 3 | $Si_3N_4$ | 6.75 $La_2O_3$-2.25 $Y_2O_3$-1 $SiO_2$ | 1900 | 2 | 0.90 | + | 2050 | 3 | 7.24 |
| 4 | $Si_3N_4$ | 5.4 $La_2O_3$-1.8 $Y_2O_3$-0.8 $SiO_2$ | 1950 | 2 | 1.34 | + | 2050 | 3 | 8.27 |
| 5 | $Si_3N_4$ | 4.5 $La_2O_3$-4.5 $Y_2O_3$-1 $SiO_2$ | 2000 | 4 | 3.45 | + | 2075 | 3 | 10.34 |
| 6 | $Si_3N_4$ | 4.05 $La_2O_3$-1.35 $Y_2O_3$-0.6 $SiO_2$ | 2000 | 4 | 3.45 | + | 2075 | 3 | 10.34 |
| 7 | $Si_3N_4$ | 4.5 $La_2O_3$-4.5 $Y_2O_3$-1 $SiO_2$ | 2000 | 4 | 3.45 | | - | | - |
| 8 | $Si_3N_4$ | 6.29 $Er_2O_3$-3.71 $Y_2O_3$ | 2000 | 4 | 3.45 | | - | | - |
| 9 | $Si_3N_4$ | 6.5 $Yb_2O_3$-6.5 $Dy_2O_3$ | 1950 | 4 | 1.34 | + | 2050 | 2 | 5.52 |
| 10 | $Si_3N_4$ | 5.98 $Er_2O_3$-3.52 $Y_2O_3$-0.5 $SiO_2$ | 1950 | 2 | 1.34 | + | 2050 | 2 | 5.52 |
| 11 | $Si_3N_4$ | 6.29 $Er_2O_3$-3.71 $Y_2O_3$ | 1950 | 2 | 1.34 | + | 2050 | 2 | 5.52 |
| 12 | $Si_3N_4$ | 6.66 $Pr_2O_3$-4.56 $Y_2O_3$ | 1900 | 1.5 | 1.03 | + | 2000 | 2 | 206.8 |
| 13 | $Si_3N_4$ | 5.5 $Yb_2O_3$-5.5 $Dy_2O_3$ | 1950 | 2 | 1.34 | + | 2050 | 2 | 10.34 |
| 14 | $Si_3N_4$ | 7.33 $Yb_2O_3$-3.67 $Dy_2O_3$ | 1950 | 2 | 1.34 | + | 2050 | 2 | 10.34 |
| 15 | $Si_3N_4$ | 3.67 $Dy_2O_3$-7.33 $Yb_2O_3$ | 1950 | 3 | 1.34 | + | 2050 | 2 | 10.34 |
| 16 | $Si_3N_4$ | 5 $Yb_2O_3$-5 $Dy_2O_3$ | 1950 | 2 | 1.72 | + | 2050 | 3 | 10.34 |
| 17 | $Si_3N_4$ | 5.54 $Er_2O_3$-3.26 $Y_2O_3$ | 1950 | 3 | 1.34 | + | 2050 | 2 | 10.34 |
| 18 | $Si_3N_4$ | 5.82 $Er_2O_3$-3.43 $Y_2O_3$-0.75 $SiO_2$ | 1950 | 2 | 1.72 | + | 2050 | 3 | 10.34 |
| 19 | $Si_3N_4$ | 8.8 $La_2O_3$-4.2 $Y_2O_3$-1.4 $SiO_2$ | 1900 | 2 | 1.03 | + | 2050 | 3 | 10.34 |

TABLE 2

| Example | Fracture Toughness (MPa $m^{0.5}$) | Density ($g/cm^3$) |
|---|---|---|
| No. 2 | 9.45 ± 0.36 | 3.32 |
| 3 | 10.64 ± 0.49 | 3.31 |
| 4 | 10.3 | 3.30 |
| 5 | 9.85 ± 0.02 | 3.25 |
| 6 | 3.02 ± 0.02 | 3.31 |
| 7 | 9.34 ± 0.24 | 3.31 |
| 8 | 9.43 ± 0.28 | 3.4 |
| 9 | 10.90 ± 0.16 | 3.46 |
| 10 | 9.28 ± 0.03 | 3.25 |
| 11 | 9.64 ± 0.23 | 3.4 |
| 12 | 9.98 ± 0.28 | 3.37 |
| 13 | 10.28 ± 0.18 | 3.48 |
| 14 | 9.78 ± 0.13 | 3.44 |
| 15 | 10.4 | 3.54 |
| 16 | 9.96 ± 0.09 | 3.45 |
| 17 | 9.45 ± 0.45 | 3.31 |
| 18 | 9.25 ± 0.21 | 3.36 |
| 19 | 11.0 ± 0.15 | 3.35 |

**Comparative Example 20**

The thermal conductivity of $Si_3N_4$ processed according to the procedures in Comparative Example 1, i.e. processed in a conventional way, was found to have a fracture toughness of about 5.3 $MPa.m^{0.5}$. The thermal diffusivity of this material was measured by the Laser flash method and found to be 0.117 $cm^2.s^{-1}$ at 23°C. The specific heat and density of this billet were 0.6532 $J.g^{-1}.K^{-1}$ and 3.25 $g.cm^{-3}$ at ambient temperature, respectively. From these data the thermal conductivity of this silicon nitride at ambient temperature is calculated to be 24.8 $W.m^{-1}.K^{-1}$. This value of thermal conductivity is in the range of values (about 25 to about 40 $W.m^{-1}.K^{-1}$) which are reported in the patent and journal literature for silicon nitride.

**Example 20**

Silicon nitride with 6.75 w% $La_2O_3$, 2.25 w% $Y_2O_3$, 1.0 w% $SiO_2$ sintered, as described in Example 3, was found to have a fracture toughness of about 11 $MPa.m^{0.5}$. The thermal diffusivity of this material was measured by the Laser flash method and found to be 0.3320 $cm^2.s^{-1}$ at 23°C. The specific heat and density of this billet were 0.6331 $J.g^{-1}.K^{-1}$ and 3.3 $g.cm^{-3}$ at ambient temperature, respectively. From these data the thermal conductivity of this silicon nitride at ambient temperature is calculated to be 67.3 $W.m^{-1}.K^{-1}$. This value of thermal conductivity is much higher than the values of thermal conductivity for silicon nitride which are reported in the patent and journal literature and which range from about 25 to about 40 $W.m^{-1}.K^{-1}$.

**Example 21**

Silicon nitride with 6 w% $La_2O_3$, 2 w% $Y_2O_3$, 2 w% SrO was sintered at 1950°C for 4 hours under 250 psi of nitrogen followed by sintering at 2050°C for 4 hours under 1500 psi of nitrogen and found to have a fracture toughness of about 12.3 $MPa.m^{0.5}$. The thermal diffusivity of this material was measured by the Laser flash method and found to be 0.382 $cm^2.s^{-1}$ at 23°C. The specific heat and density of this billet were 0.6306 $J.g^{-1}.K^{-1}$ and 3.33 $g.cm^{-3}$ at ambient temperature, respectively. From these data the thermal conductivity of this silicon nitride at ambient temperature is calculated to be 80.2 $W.m^{-1}.K^{-1}$. This value of thermal conductivity is much higher than the values of thermal conductivity for silicon nitride which are reported in the patent and journal literature and which range from about 25 to about 40 $W.m^{-1}.K^{-1}$.

The silicon nitride of Comparative Example 1, which was conventionally processed and sintered at 1765°C, had fracture toughness of 6.0 $MPa.m^{0.5}$. The indentation/strength behavior of this material yields a value of -0.3013 for the constant B in Test 2 which implies that this ceramic does not exhibit R-curve behavior or damage tolerance (cf. theory predicts that ceramics for which the constant B is equal to -1/3 do not have R-curve behavior lend the value of -0.3013 is not significantly different from -1/3 at 98% confidence level). The absence of R-curve behavior in this silicon nitride is in agreement with the earlier findings of Salem and Shannon (1987) on conventionally processed silicon nitrides.

In sharp contrast to conventionally processed silicon nitride as exemplified by Comparative Example 1, silicon nitride formulated and processed according to the present invention and as described in Examples 1, 2-5, 7-19 and 20-21 exhibit, unexpectedly, R-curve behavior, damage tolerance, high Weibull modulus, and high thermal conductivity. For instance, the silicon nitride of Example 3 which is characterized by a highly acicular microstructure and a high density of large grains shows a sharp increase in crack growth resistance as the crack extends, in other words it exhibits R-curve behavior. This behavior is a result of the unique microstructure of this ceramic which makes the path of a propagating crack very tortuous (crack deflection processes) and leads to grain bridging processes in the wake of the crack. The R-curve behavior of the silicon nitride of the present invention is a highly unexpected result.

The R-curve behavior of the ceramics of the present invention is also confirmed by their indentation/strength behavior. For instance, the value of the constant B in Test 2 for the ceramic of Example 3 is -0.227 which is much higher than -1/3 and, therefore, the ceramic of the present invention has strong R-curve behavior. The implication of the higher value for the constant B for this ceramic is that the rate of strength reduction as indentation load (i.e. damage) increases is less than the corresponding rate for a material without R-curve behavior. In other words, the ceramic of Example 3 which has R-curve behavior retains a higher fraction of its initial strength than a ceramic without R-curve behavior when damaged under the same indentation load. For example, the material of Example 3, after being indented with a Vickers indenter at a load of 196 N, retains 60% of its initial strength while a ceramic without R-curve behavior retains only 25% of its initial strength. These data show that the monolithic silicon nitride ceramic of the present invention which has R-curve behavior also has a better tolerance to damage than a comparable ceramic without R-curve behavior.

Moreover, the monolithic silicon nitride of the present invention has a higher Weibull modulus as a result of its unique microstructure. The Weibull modulus is a measure of the distribution of strength of a ceramic which, in turn, reflects the distribution of critical flaw sizes in the material. The critical flaw size distribution is affected by the powder used to make the ceramic, the special treatments to which the powder is subjected, the method used to form a powder compact, the method used to densify the powder compact, the special treatments to which the sintered ceramic is subjected, the machining flaws inflicted on the ceramic during test specimen preparation, and the microstructure of the ceramic. For these reasons, comparisons of Weibull modulus for ceramics which have been processed by methods which are different in more than one of the aforementioned effects should not be made.

This comparison can be made for the ceramics prepared in Comparative Example 1 and Example 3 because in both cases untreated powders are mixed and compacted by the same procedures, and the sintered ceramics were not subjected to any additional treatments and were machined into test specimens by the same techniques. The Weibull modulus of monolithic silicon nitride prepared according to the procedure of Comparative Example 1 is in the range of 7-10. These values are typical for the Weibull modulus of silicon nitride ceramics which have been prepared from powder compacts formed by cold isostatic pressing (the method used in the cited Examples,) and which ceramics have a microstructure made up of very fine grains and no R-curve behavior. On the other hand, the corresponding modulus of the silicon nitride of Example 3 which has a microstructure of highly acicular grains and a high density of large grains and which has pronounced R-curve behavior is 18.2. This high value of Weibull modulus for the silicon nitride ceramics of the present invention reflects the unique microstructure and the R-curve behavior of the material.

In addition, the silicon nitride of the present invention has unexpectedly and unusually high thermal conductivity. The thermal conductivity of the ceramic cited in Comparative Example 20, which is processed by conventional methods, is only 24.8 $W.m^{-1}.K^{-1}$, which is in the range of thermal conductivity values of similar ceramics in the prior art. By way of contrast, the thermal conductivity of the ceramics of the present invention as cited in Examples 20 and 21 is 67.3 and 80.2 $W.m^{-1}.K^{-1}$, respectively. These values are much higher than the best thermal conductivity reported in the prior art. Notably, the thermal conductivity of the ceramic in Example 21 is two times the best thermal conductivity value reported by Ziegler and Hasselman (1981). The high conductivity of the silicon nitride ceramics of the present invention improves the thermal shock resistance of this ceramic and reduces the thermal stresses that are generated in thermally transient environments. Without being bound by any particular theory, it is believed that the high thermal conductivity of the ceramic is attributable to its unique microstructure (i.e. the high density of large, high crystallinity and high purity grains) and the moderate amounts of sintering aids utilized.

In formulating the ceramic there is required an appropriate quantity of sintering aids in order to obtain not only full densification but also the unique microstructure which leads to high fracture toughness, R-curve behavior, damage tolerance, high Weibull modulus and high thermal conductivity as discussed previously. It has unexpectedly been found that when the sintering aid used in about 6 w% or less, the resulting ceramic has low fracture toughness even through the microstructure is highly acicular. This finding is illustrated by the ceramic which was prepared according to Example 6. When sintered to full density in the presence 6 w% sintering aids, the ceramic exhibited a fracture roughness of only 3.02 $MPa.m^{0.5}$. In contrast to these findings, when the amount of sintering aids was increased to 8 w% or higher the fracture toughness of the resultant ceramics was found to be in the range of 9.28 to 11.0 $MPa.m^{0.5}$. These data show that the amount of sintering aides used must be greater than about 6 wt% in order to obtain silicon nitride ceramics with high fracture toughness and other desirable properties as discussed above. On the other hand, if the amount of sintering aids is higher than about 18 w% the resultant ceramic will not have good mechanical properties, such as Young's modulus, flexural and tensile strength or creep resistance, at high temperature because of the large amount of oxide or oxynitride grain boundary phase which will be present in the sintered ceramic.

## Test 1. R-Curve Behavior

The crack growth resistance of the silicon nitride ceramic of the present invention, as a function of crack extension, was measured using the double cantilever beam (DCB) technique discussed by A. Reichl and R.W. Steinbrech in J. Am. Ceram. Soc., vol. 71, C-299-C-301 (1988). If the resistance to crack growth, i.e. toughness, increases with crack extention, the material is said to exhibit R-curve behavior.

A silicon nitride cylindrical billet prepared according to Example 3 was cut into rectangular plates and diamond ground to approximately 3 mm thickness. "Short" DCB specimens, of the type shown in FIG. 10, were made from these plates with final dimensions of approximately 30 by 25 by 3 mm. One 30 by 25 mm surface was diamond polished to 1 micrometer finish. A 23 mm notch was cut with an 800 micrometer diamond saw, and an additional 2mm notch was cut with an approximately 180 micrometer diamond saw to act as a starter crack.

The toughness of the silicon nitride as a function of crack extension was measured from stable crack growth experiments in air. The crack length, load, and displacement were measured simultaneously using a dedicated testing machine equipped with a traveling microscope at Case Western Reserve University, Cleveland, OH. THe toughness curve was calculated from the experimental compliance data using the equation:

$$G = \frac{P^2}{2t}\frac{dc}{da}$$

where G is strain energy release rate, P is load, B is the DCB specimen thickness, and $\frac{dc}{da}$ is the change in compliance with crack extension and

$$K_r = \left(\frac{EG}{1-n^2}\right)^{1/2}$$

where E and n are the Young's modulus and Poisson's ratio, respectively, and $K_r$ is fracture toughness as discussed by M.J. Readey et al. in Mat. Res. Soc. Symp. Proc., vol. 78, 107-120 (1987).

The toughness curve for the silicon nitride of the present invention is shown in FIG. 4. This curve shows that the toughness of the ceramic increased with increasing crack length and, therefore, this silicon nitride exhibits R-curve behavior. The data in FIG. 4 show that the fracture toughness of the material increases from about 4.7 to about 10.0 MPa $m^{0.5}$ over a crack extension of about 1.5 mm, and remains approximately constant on further crack increase.

Figures 5(a) and 5(b) show short lengths of the crack which was grown stably in the DCB specimen. Figure 5(a) shows typical morphology of the crack that was propagated for about 2.5 mm. The crack follows a tortuous path with frequent and sharp deflections. These deflections are partly responsible for the high toughness of this silicon nitride, in analogy with the crack-deflection toughening discussed by K.T. Faber and A.G. Evans in J. Am. Ceram. Soc., vol. 66, C-94-C-96 (1983).

Figure 5(b) shows a large silicon nitride grain which fractured, at almost 90ÅC angle to its prismatic axis, as the crack propagated past the grain location. In addition, the grain has been pulled a short distance out of its sockets with the bulk of the ceramic as the crack propagated further. This figure demonstrates that phenomena known in the art as crack bridging and fiber pull-out processes are active in this high toughness silicon nitride. These phenomena are primarily responsible for the R-curve behavior which is exhibited by this ceramic. Surprisingly, this R-curve behavior is observed in silicon nitride ceramics that are densified and heat treated in accordance with the present invention.

Test 2. Indentation/Strength Behavior

Indentation/strength measurements are relatively fast and simple experiments which provide information on whether a material possesses R-curve properties, as discussed by R. F. Krause, Jr. in J. Am. Ceram. Soc., vol. 71, 338-43 (1988). Furthermore, data produced by these measurements, when plotted as strength vs. indentation load, illustrate the damage tolerance property of the material.

The indentation/strength measurement is carried out by cutting the material to be tested into 3 mm by 4 mm by 50.8 mm bars. Indentations were made in the central region of the bar with a Vickers diamond indenter. The fracture strength, S, of the indented bar was then measured under 4-pt bend loading with the indented surface on the tensile side. A series of indentation loads, P, ranging from 9.8 N to 294 N were applied, and each bar was indented with a specific indentation load. Care was taken that each bar broke with fracture cracks initiating from the indented site. Typically, 4 or 5 indentations, 0.5 mm apart, were applied on those bars indented with load equal to or less than 49 N to increase the probability that fast fracture initiated from an indented site. To obtain accurate information on the shape and magnitude of the R-curve of the material tested, the surface of the bar was diamond polished to 1 micrometer finish prior to indentation to remove residual stresses induced from machining.

Fracture mechanics analysis, as discussed by P. Chantikul et al in J. Am. Ceram. Soc., vol. 64, 539-543 (1981), predicts that a log-log plot of indentation strength s versus indentation load p should result in a straight line according to the equation

$$\log s = \log A + B \log P$$

and that the slope, B, of this line, i.e.:

$$B = \frac{d(\log s)}{d(\log P)}$$

should be equal to -1/3 if the material does not have R-curve behavior. This model had been varified and is broadly applied to measure the fracture toughness of ceramics. Moreover, several monolithic silicon nitride ceramics have been shown to have B equal to -1/3 (see, for example, P. Chantikul et al, J. Am. Ceram. Soc., vol. 64, 539-43 (1981) and Y. Tajima et al, Powder Processing Science, Orlando, Florida, Nov. 1-4, 1987), indicating that those silicon nitride materials do not have R-curve behavior.

Fracture mechanics also predicts [Krause (1988)] that if a material has R-curve behavior, then B would be larger than -1/3.

Indentation/strength data for the material of Comparative Example 1 are plotted in Fig. 6. Least squares analysis of these data show that the slope, B, is equal to -0.3013, which is not significantly different, at 98% confidence level, from the theoretical value of -1/3 predicted for a material which does not have R-curve behavior. As discussed in Comparative Example 1, the fracture toughness of this material is relatively low at 6.0 $MPa \cdot m^{0.5}$. The microstructure of this material, as shown in Fig. 1a, consists of very fine grains which do not cause crack bridging and grain pull-out phenomena to occur. Therefore, the material does not have R-curve behavior as demonstrated by the indentation strength data.

Figure 7 compares the indentation/strength properties of samples manufactured in Example 3 with a state-of-the-art commercial monolithic silicon nitride made in Japan. The graph shows that: (1) Example 3 material has B = -0.227, which is significantly larger than -1/3, indicating strong R-curve behavior; and (2) the commercial material has B = -1/3 indicating that this silicon nitride does not have R-curve behavior. Thus, the indentation/strength results have confirmed the DCB results which show that the material of Example 3 has strong R-curve behavior.

Comparing the micrograph of the fracture surface of the material manufactured in Example 3 [see Fig. 3(b)] to the micrograph in Fig. 1(a) which is the micrograph of the fracture surface of the material manufactured in Comparative Example 1 (which doesn't have R-curve behavior), it is clear that the fracture path of the former is more tortuous. This more tortuous path is a result of the significant difference in microstructure. The material of Example 3 was especially processed so that a microstructure of wide grain size distribution results, with individual grains having sizes ranging from 0.5 $\mu$m to 50 $\mu$m in width and 5 $\mu$m to 500 $\mu$m in length. These grains are formed and distributed in such a way that significant toughening results and the fracture toughness (10.6 $MPa \cdot m^{0.5}$) becomes about 2 times that of the material of Comparative Example 1. In addition, those large needle-like grains function like whiskers at the wake of the propagating crack so that a bridging and/or grain pull-out type of mechanism exists [see Fig. 5(a) and (b)]. The presence of these mechanisms causes the material to possess strong R-curve behavior as demonstrated in Test 1 and Test 2.

In Figure 7, it was shown that the rate of strength reduction as indentation load (i.e. damage) increases for the ceramics manufactured in Example 3 is less than for the state-of-the-art commercial monolithic $Si_3N_4$ ceramic. That is, the ceramic manufactured in Example 3 which has strong R-curve behavior has the desirable damage tolerance property. This property can be more easily appreciated by examining Figure 8, which depicts the data of Figure 7 on a linear scale. Initially, the commercial $Si_3N_4$ ceramic has a strength of about 900 MPa, which is about 40% stronger than the material manufactured in Example 3. However, after only a 29.4 N indentation (i.e. damage), the material manufactured in accordance with the present invention becomes the stronger one. After a 196 N indentation, the commercial $Si_3N_4$ ceramic has lost 75% of its initial strength, while material of the present invention still retains 60% of its initial strength, and is about 40% stronger than the commercial material. It is generally accepted that Vickers indentation-induced damage closely simulates the impact damage on ceramics during service. In addition, the material with R-curve behavior has higher resistance not only to impact damage but also to other forms of damage such as physical, chemical and thermal damage. That is to say, the material of the present invention having high toughness and R-curve behavior will retain a higher fraction of its strength upon damage, and is therefore referred to as damage tolerant material.

Test 3. Weibull Modulus

Another desirable property of material having R-curve behavior is a narrow distribution of strength [K. Kendall et al, J. Mater. Res., vol. 1, 120-123 (1986); R. F. Cooke and D. R. Clarke, Acta. Metall., vol. 36, 555-562 (1988)]. The distribution of the strength constitutes a Weibull's probability distribution function of rupture, which is expressed by the following equation:

$$F(\sigma) = 1 - \exp(-(\sigma/\sigma_o)^m)$$

in which

- $F(\sigma)$: probability distribution function of rupture at strength value $\sigma$;
- $\sigma_o$: constant; and
- m: Weibull's constant.

The greater the m, a variable in Weibull's probability distribution function of rupture, the smaller the strength distribution. The smaller the m, the greater the strength distribution. Kendall et al and Cooke et al's model shows that m can be more than doubled for material with strong R-curve behavior.

Figure 9 shows the m value for the ceramics manufactured in Example 3 is 18.2. This value is high as compared to values reported in the literature, where typically m is close to 10 for ceramic materials processed in the conventional way. The very high Weibull modulus of our isopressed material is a direct result of the R-curve property the material possesses.

## Claims

1. A monolithic silicon nitride ceramic having a highly acicular microstructure and a high density of large grains that provide R-curve behavior, said ceramic thereby exhibiting increasing resistance to crack growth as a function of increasing crack length, and an average Chevron Notch fracture toughness ranging from 9.25-11 $MPa.m^{0.5}$.

2. A ceramic as recited by claim 1, having a 4-point bend strength Weibull modulus of at least 15.

3. A ceramic as recited by claim 1, having a damage tolerance characterized by the equation B=d (log S)/d(log P) where S is the 4 point bend strength measured after indentation, P is the Vickers indentation load and B is greater than -0.3.

4. A ceramic as recited by claim 1, having a thermal conductivity of at least 45 $W.m^{-1}.K^{-1}$ at ambient temperature.

5. A ceramic as recited by claim 2, said ceramic having been densified and heat treated in the presence of a sintering aid that has a solidus temperature less than the densification temperature and remains stable throughout said heat treatment.

6. A ceramic as recited by claim 5, wherein said sintering aid is present in an amount of at least 6.5 w%.

7. A ceramic as recited by claim 5, wherein said sintering aid is present in an amount of at least 8 w%.

8. A ceramic as recited by claim 5, wherein said sintering aid is present in an amount ranging from about 6.5 to about 18 w%.

9. A ceramic as recited by claim 5, wherein said densification and heat treatment step is carried out at a temperature of at least about 1850 °C for a time period of at least 30 minutes.

10. A ceramic as recited by claim 5, wherein said densification and heat treatment step is carried out at a temperature of at least 1900 °C for a time period of at least 90 minutes.

11. A ceramic as recited by claim 5, wherein said densification and heat treatment step is carried out at a temperature of at least 1950 °C for a time period of at least 150 minutes.

12. A ceramic as recited by claim 1, having a Chevron Notch fracture toughness of at least about 10 $MPa.m^{0.5}$.

**Patentansprüche**

1. Keramikmaterial aus monolithischem Siliziumnitrid mit einer in hohem Maße nadelförmigen Mikrostruktur und einer hohen Dichte großen Kornes, welches ein R-Kurven-Verhalten schafft, welches Keramikmaterial dadurch einen steigenden Widerstand gegen Rißwachstum als Funktion einer wachsenden Rißlänge zeigt, sowie eine durchschnittliche Chevron-Kerb-Bruchzähigkeit, welche von 9,25-11 $MPa.m^{0,5}$ reicht.

2. Keramikmaterial nach Anspruch 1, mit einem 4-Punkt-Biegefestigkeits-Weibull-Modul von mindestens 15.

3. Keramikmaterial nach Anspruch 1, mit einer Schädigungstoleranz, die durch die Gleichung B = d (log S/d(logP) gekennzeichnet ist, worin S die nach einer Eindellung gemessene 4-Punkt-Biegefestigkeit ist, P die Vickers-Eindellungsbelastung und B größer als -0,3 ist.

4. Keramikmaterial nach Anspruch 1, mit einer Wärmeleitfähigkeit von mindestens 45 $W.m^{-1}.K^{-1}$ bei Umgebungstemperatur.

5. Keramikmaterial nach Anspruch 2, welches Keramikmaterial in Gegenwart eines Sinterhilfsmittels verdichtet und wärmebehandelt wurde, welches eine geringere Solidustemperatur besitzt als die Verdichtungstemperatur und das während der gesamten Wärmebehandlung stabil bleibt.

6. Keramikmaterial nach Anspruch 5, bei dem das Sinterhilfsmittel in einer Menge von mindestens 6,5 Gew.-% vorhanden ist.

7. Keramikmaterial nach Anspruch 5, bei dem das Sinterhilfsmittel in einer Menge von mindestens 8 Gew.-% vorhanden ist.

8. Keramikmaterial nach Anspruch 5, bei dem das Sinterhilfsmittel in einer von etwa 6,5 bis ungefähr 18 Gew.-% reichenden Menge vorhanden ist.

9. Keramikmaterial nach Anspruch 5, bei dem der Verdichtungs- und Wärmebehandlungsschritt während einer Zeitspanne von zumindest 30 Minuten bei einer Temperatur von wenigstens etwa 1850°C ausgeführt wird.

10. Keramikmaterial nach Anspruch 5, bei dem der Verdichtungs- und Wärmebehandlungsschritt während einer Zeitspanne von zumindest 90 Minuten bei einer Temperatur von wenigstens etwa 1900°C ausgeführt wird.

11. Keramikmaterial nach Anspruch 5, bei dem der Verdichtungs- und Wärmebehandlungsschritt während einer Zeitspanne von zumindest 150 Minuten bei einer Temperatur von wenigstens 1950°C ausgeführt wird.

12. Keramikmaterial nach Anspruch 1, mit einer Chevron-Kerb-Bruchzähigkeit von wenigstens etwa 10 $MPa.m^{0,5}$.

**Revendications**

1. Céramique de nitrure de silicium monolithique ayant une microstructure fortement aciculaire et une forte densité de grains de grandes dimensions qui apportent un comportement de courbe R, cette céramique présentant ainsi une résistance de plus en plus élevée à la croissance des fissures, en fonction de l'augmentation de la longueur des fissures et une ténacité à la rupture avec Entaille en Chevron allant de 9,25 à 11 $MPa.m^{0,5}$.

2. Céramique selon la revendication 1, ayant un module de Weibull de la résistance à la flexion en 4 points d'au moins 15.

3. Céramique selon la revendication 1, ayant une tolérance à la détérioration caractérisée par l'équation $B = d (\log S)/d(\log P)$, dans laquelle S est la résistance à la flexion en 4 points mesurée après pénétration, P est la charge de pénétration Vickers, et B est supérieure à -0,3.

4. Céramique selon la revendication 1, ayant une conductibilité thermique d'au moins 45 $W.m^{-1}.K^{-1}$à la température ambiante.

5. Céramique selon la revendication 2, cette céramique ayant été densifiée et traitée par la chaleur en présence d'un adjuvant de frittage qui a une température de solidus inférieure à la température de densification et reste stable tout au long de ce traitement thermique.

6. Céramique selon la revendication 5, dans laquelle cet adjuvant de frittage est présent dans une proportion d'au moins 6,5 % en poids.

7. Céramique selon la revendication 5, dans laquelle cet adjuvant de frittage est présent dans une proportion d'au moins 8 % en poids.

8. Céramique selon la revendication 5, dans laquelle cet adjuvant de frittage est présent dans une proportion allant d'environ 6,5 à environ 18 % en poids.

9. Céramique selon la revendication 5, dans laquelle le stade de densification et de traitement thermique est effectué à une température d'au moins environ 1850°C pendant une durée d'au moins 30 minutes.

10. Céramique selon la revendication 5, dans laquelle ce stade de densification et de traitement thermique est effectué à une température d'au moins 1900°C pendant une durée d'au moins 90 minutes.

11. Céramique selon la revendication 5, dans laquelle ce stade de densification et de traitement thermique est effectué à une température d'au moins 1950°C pendant une durée d'au moins 150 minutes.

**12.** Céramique selon la revendication 1, ayant une résistance à la rupture sur échantillon à Entaille en Chevron d'au moins environ 10 $MPa.m^{0,5}$.

Fig. 1a

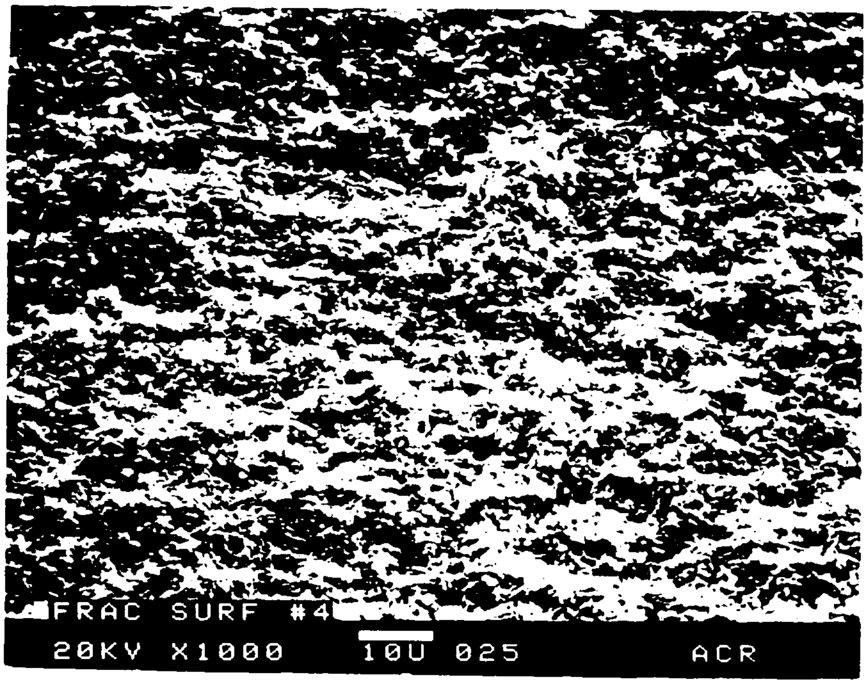


Fig. 1b

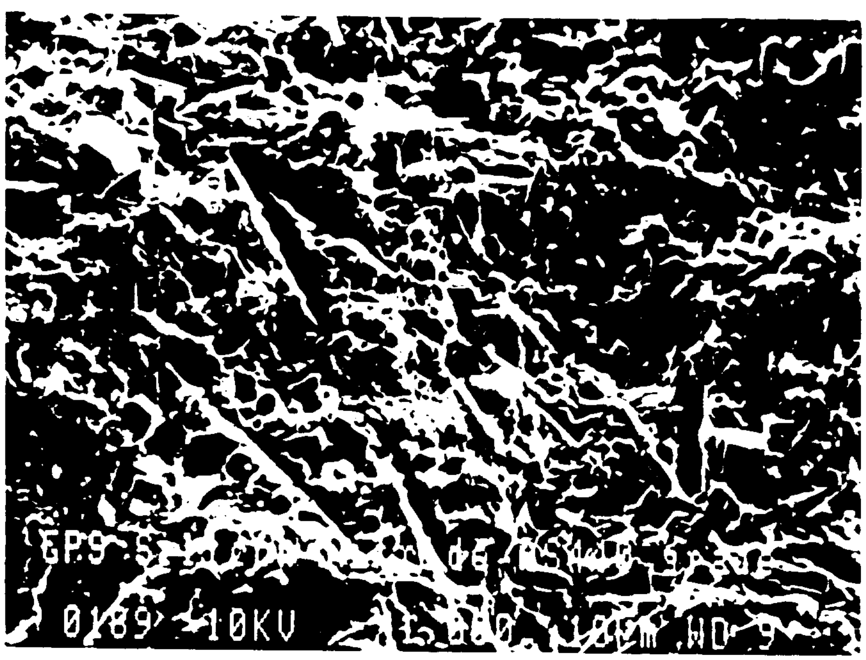

Fig. 2

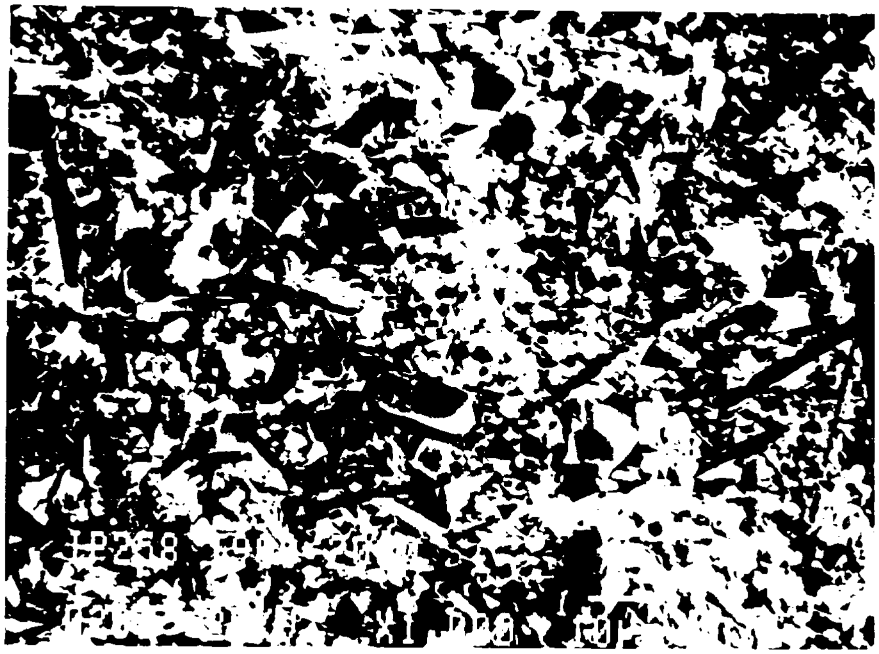

Fig. 3a

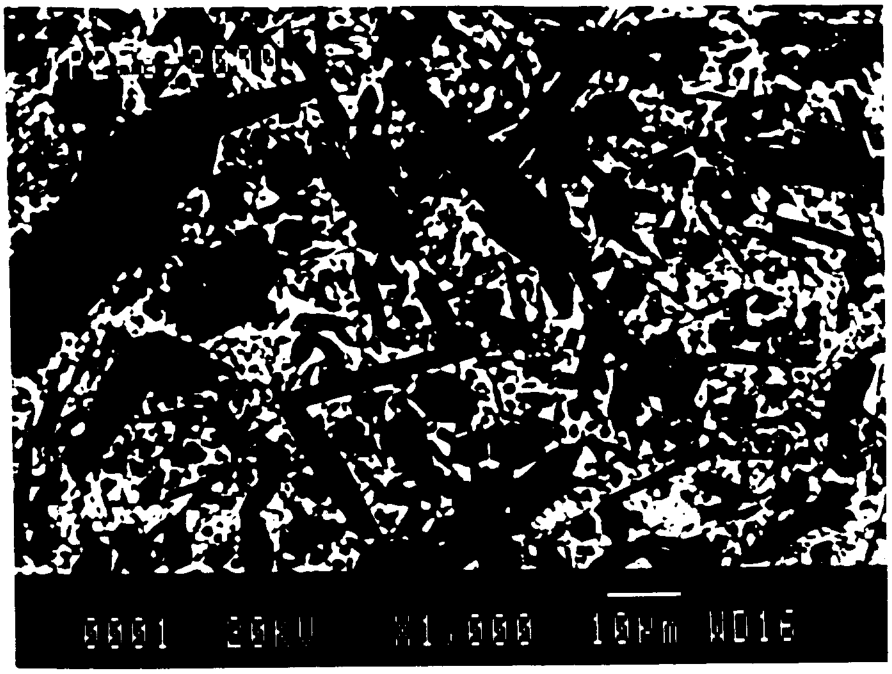


Fig. 3b

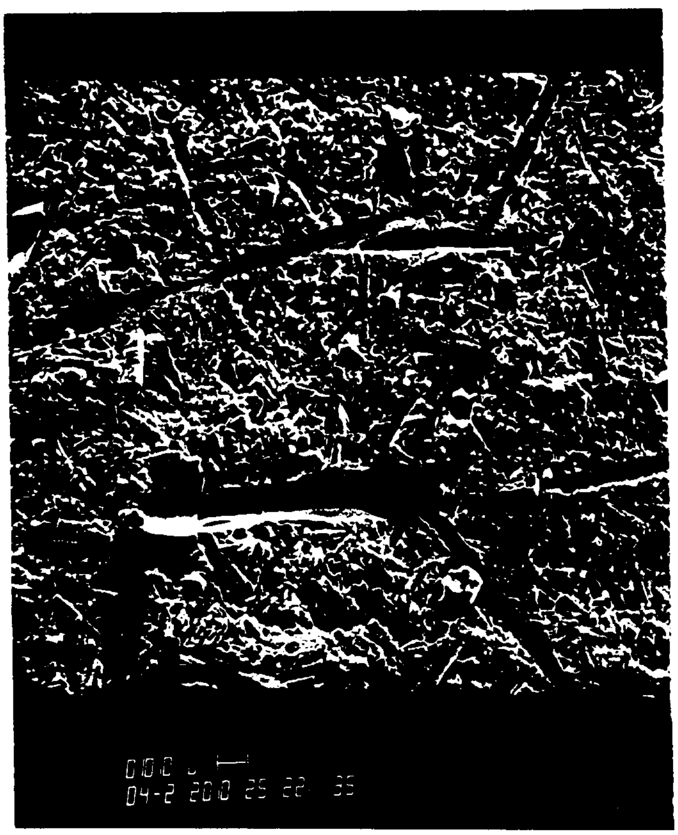

Fig. 4

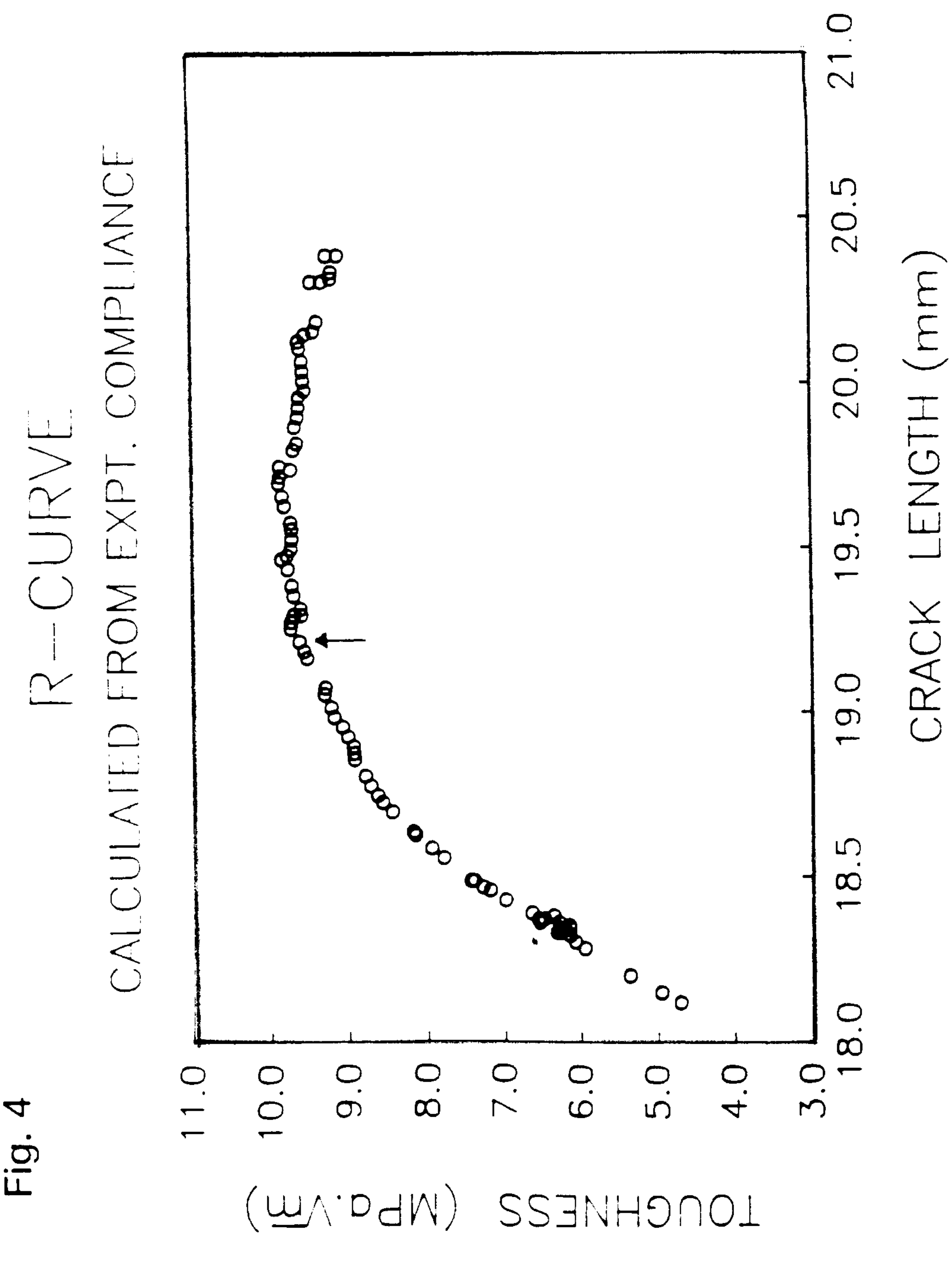
R-CURVE
CALCULATED FROM EXPT. COMPLIANCE
TOUGHNESS (MPa.√m)
11.0
10.0
9.0
8.0
7.0
6.0
5.0
4.0
3.0
18.0
18.5
19.0
19.5
20.0
20.5
21.0
CRACK LENGTH (mm)

Fig. 5a

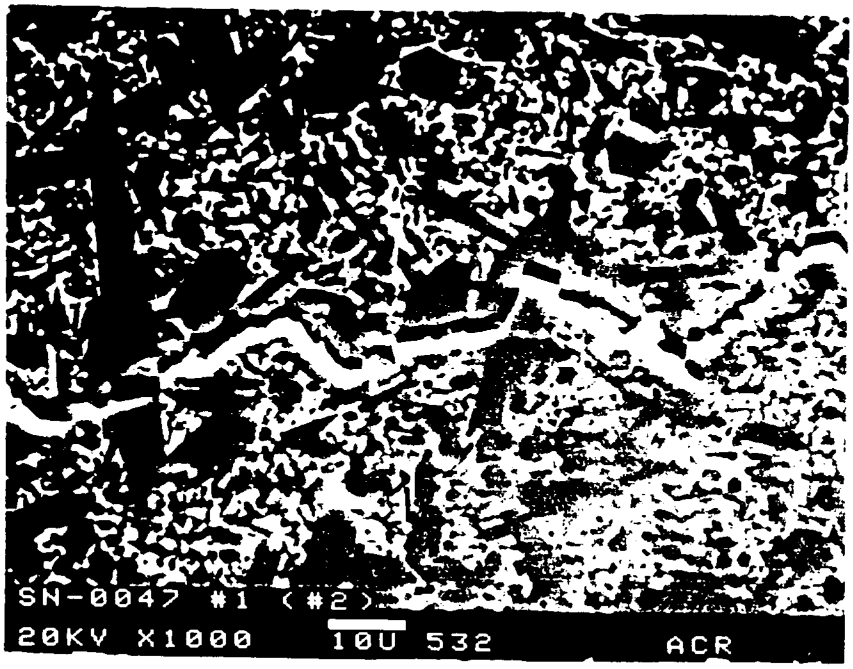
SN-0047 #1 (#2)
20KV X1000 10U 532 ACR

Fig. 5b

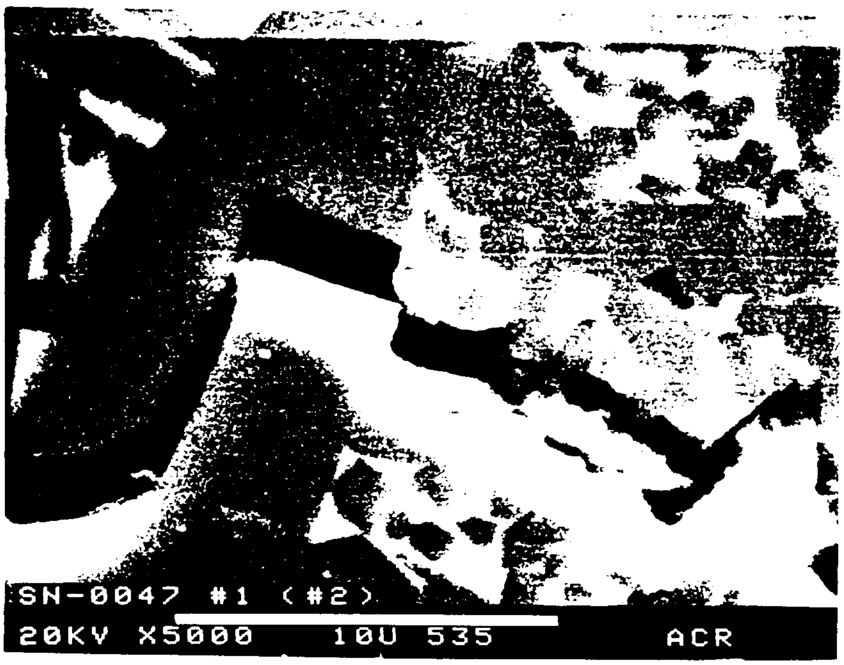
SN-0047 #1 (#2)
20KV X5000 10U 535 ACR

Fig. 6

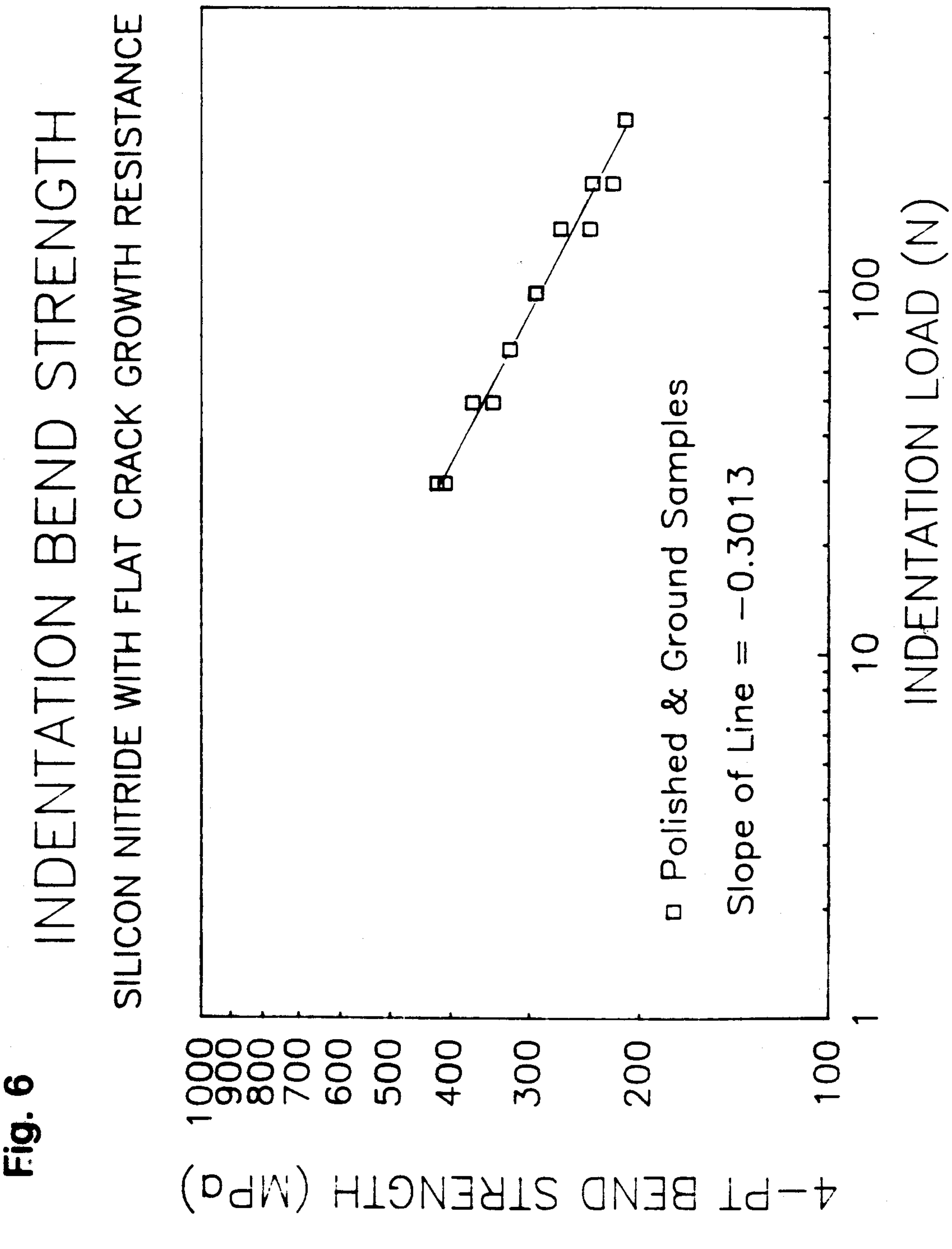
INDENTATION BEND STRENGTH
SILICON NITRIDE WITH FLAT CRACK GROWTH RESISTANCE
4-PT BEND STRENGTH (MPa)
1000
900
800
700
600
500
400
300
200
100
1
10
100
INDENTATION LOAD (N)
Polished & Ground Samples
Slope of Line = −0.3013

Fig. 7

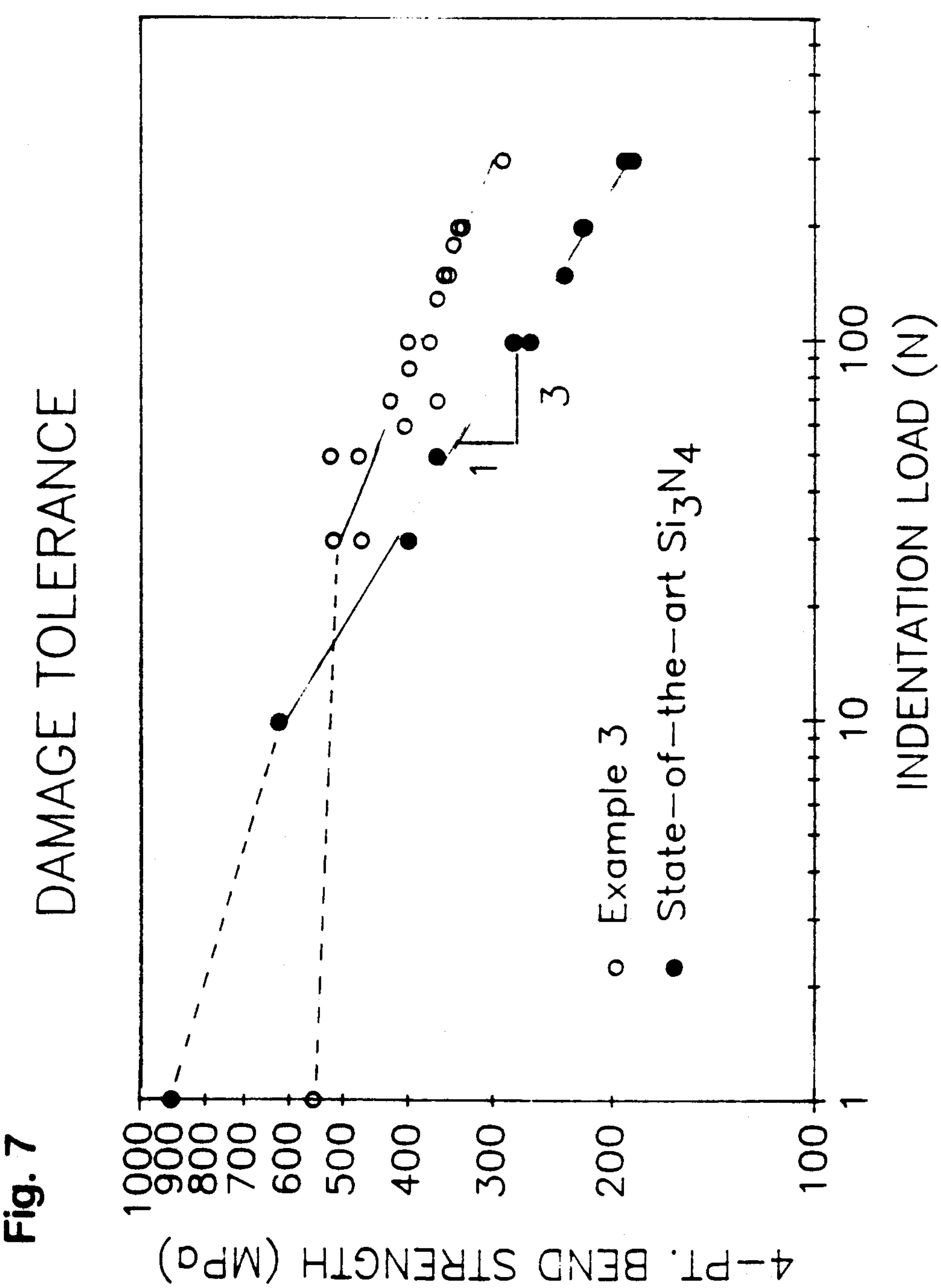
DAMAGE TOLERANCE
4-PT. BEND STRENGTH (MPa)
1000
900
800
700
600
500
400
300
200
100
1
10
100
INDENTATION LOAD (N)
1
3
Example 3
State-of-the-art $Si_3N_4$

Fig. 8

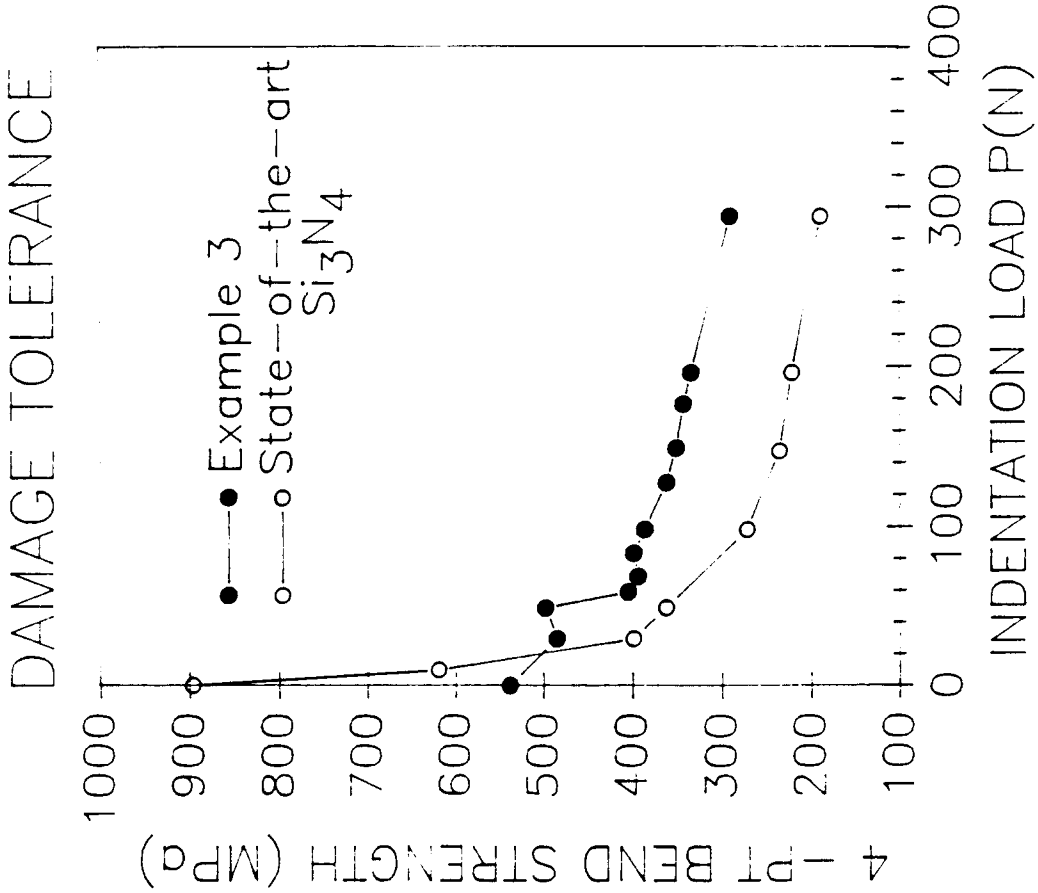
DAMAGE TOLERANCE
Example 3
State-of-the-art
Si3N4
4-PT BEND STRENGTH (MPa)
INDENTATION LOAD P(N)
1000
900
800
700
600
500
400
300
200
100
0
100
200
300
400

Fig. 9

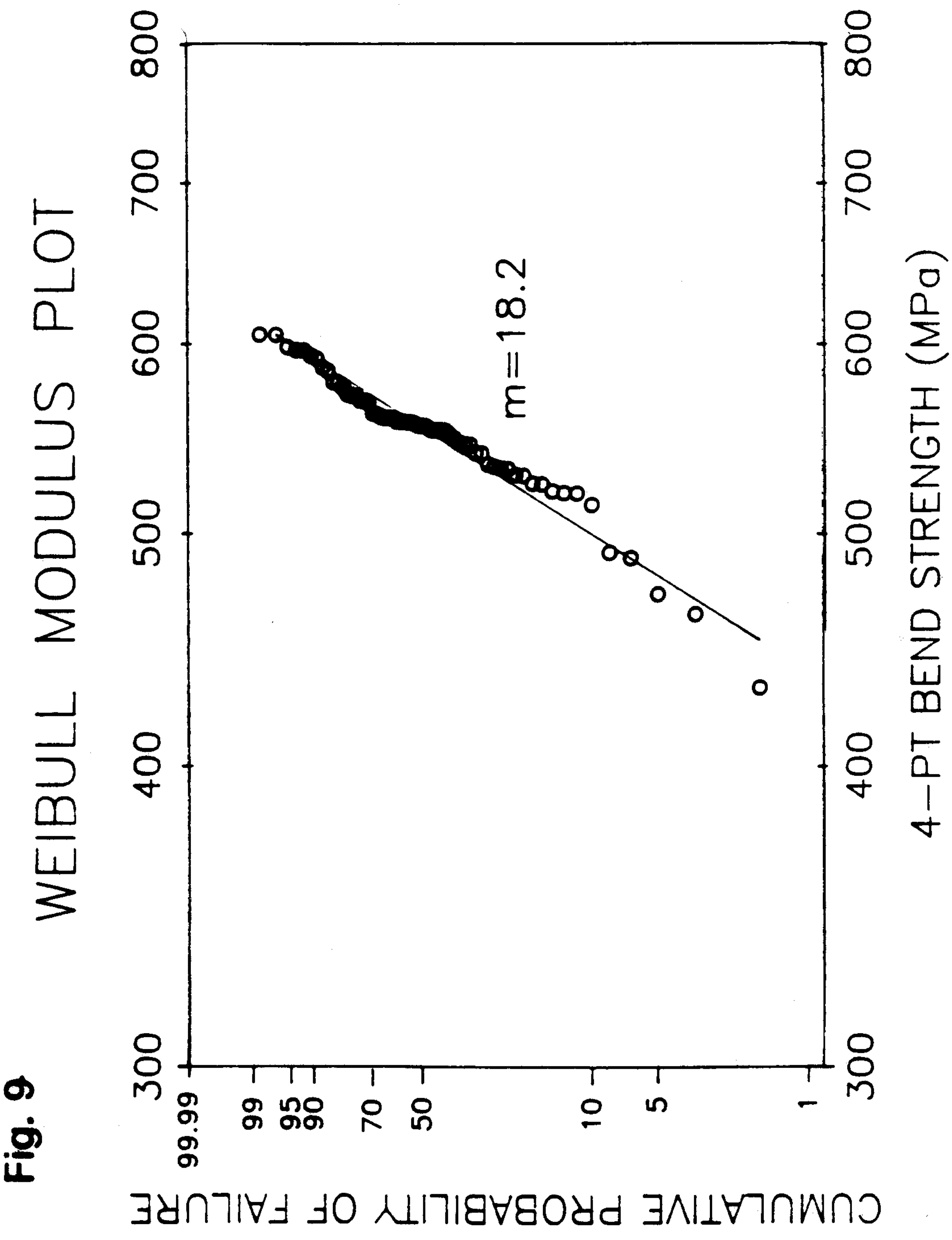
WEIBULL MODULUS PLOT
m=18.2
300
400
500
600
700
800
4—PT BEND STRENGTH (MPa)
99.99
99
95
90
70
50
10
5
1
CUMULATIVE PROBABILITY OF FAILURE

Fig. 10

# MEASUREMENT OF R – CURVE
# DOUBLE CANTILIVER BEAM TECHNIQUE

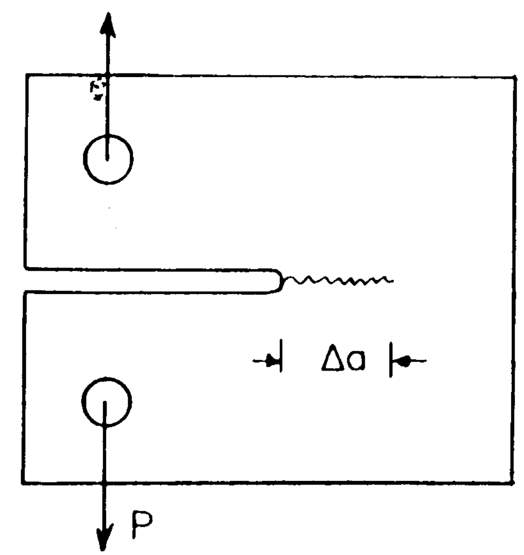


**Strain Energy Release Rate:** $$G = \frac{P^2}{2B} \cdot \frac{dC}{da}$$

**Fracture Toughness:** $$K = (E'G)^{1/2}$$